# EUROPEAN PATENT SPECIFICATION

(11) **EP 2 903 123 B1**
(45) Date of publication and mention of the grant of the patent: **28.06.2017**
(21) Application number: 14153119.4
(22) Date of filing: 29.01.2014
(51) Int. Cl.: H02J 7/00, B60L 1/00

(54) **Safety device adapted to be integrated in the electrical circuit of a vehicle**
Sicherheitsvorrichtung, die zum Einbau in den Stromkreis eines Fahrzeugs angepasst ist
Dispositif de sécurité conçu pour être intégré dans le circuit électrique d'un véhicule

(43) Date of publication of application: 05.08.2015
(73) Proprietor: Forsberg, Per Anders, 131 52 Nacka Strand (SE)
(72) Inventor: Forsberg, Per Anders, 131 52 Nacka Strand (SE)
(74) Representative: de Zeeuw, Johan Diederick

(56) References cited:
- EP-A2- 2 023 460
- WO-A2-2011/092384
- DE-A1-102008 055 956
- US-A1- 2008 150 483

## Description

### Introduction

The present invention relates to a safety device, in particular a safety device comprising a switch which is adapted to be integrated in the electrical circuit of a vehicle and which is adapted to switch off the battery in said vehicle.

In vehicles, there are several potential dangers for the integrity of the battery for the electrical system and for the vehicle as a whole. It is known to use a safety device which is adapted to identify a potentially dangerous situation for a vehicle and which is adapted to reply to said identification of said dangerous situation by switching off the electrical power provided by one or more batteries in the vehicle. In a number of territories the use of a safety device is required or regulated by law, for vehicles which could produce a risk for the environment. This is, for instance, the case for trucks adapted to transport of dangerous liquids. In case such a truck would fall over, to protect the integrity of the vehicle and thereby the environment, the safety device should be able to switch off an electrical circuit to avoid short circuits and other dangers related to the presence of electrical power.

According to the prior art, a safety device is typically provided with electromagnetic actuator and mechanical-galvanic switching elements. An example is described in European Patent EP0866483.

Usually, safety devices are used in combination with separate specific sensors. This sensor is for instance an accelerometer, which is used to monitor the inclination of the vehicle with respect to the normal. A further type of sensor which can be used in a safety device is a gyrometer. Such a gyrometer can be used to monitor the inclination of the vehicle with respect to the normal. The use of accelerometers in vehicles is disclosed in US patents and 6,397,133 and 6,225,894. Documents US 2008/150483 A1 and WO 2011/092384 A2 disclose also a relevant prior art. Because of the importance of protecting the electrical system within the vehicle and thereby protecting the integrity of the vehicle itself, it is an objective of the present invention to improve the safety devices according to the prior art.

The invention relates, according to a first aspect of the invention to a safety device for an electrical system of a vehicle, wherein the safety device comprises a first connector or terminal for connecting the battery voltage and a second connector or terminal for connecting the vehicle voltage and control means adapted to know the difference (U3-U1) of voltage between the first and second terminals, wherein the safety device further comprises a housing and at least one metal core boards in contact with the first and the second terminals respectively, wherein the safety device further comprises inputs for power supply rail and for control, the safety device further comprising a switch (S1) for switching off the connection between the first and second terminals, the switch (S1) being actively connected to means for operating the switch (S1) based on at least a first of:
- the voltage at the first terminal;
- the voltage at the second terminal; and
- the voltages at the inputs;
and wherein the switch (S1) comprises at least two MOSFET transistors, wherein the MOSFET transistors are mounted on the metal core boards and are connected in parallel and in a single direction in order to obtain an intrinsic diode between the first and the second terminal of the safety switch.

According to an embodiment of the invention, the control means comprise a circuit to measure the voltage (U1) at the first terminal, a circuit to measure the voltage (U3) at the second terminal and an amplifier to produce an amplified signal (Ud) of the difference of voltage between the first and second terminals.

According to an embodiment of the invention, the safety device comprises two metal core boards and a flexible circuit provided with connecting pins for connection with the first and the second metal core board, the metal core boards being connected one to the other, and mounted back-to-back, to allow mechanical contact between the cores of said metal core boards.

According to an embodiment of the invention, the safety device comprises a first and second stud, the studs each comprising a first part adapted to be fixed against the outside of the housing and providing a protrusion to form the first and second terminal, the studs comprising a second part adapted to pass through holes in the housing and adapted to pass through holes in the at least one metal core board, wherein said second parts of the studs are adapted to receive fixing means such as a flange nut, for fixing the at least one metal core board against the inside of the housing, each stud comprising a third part aligning, in the axial direction of the through holes and as a result of fastening the nut, with the inside of the housing to clamp on the at least one metal core board.

According to an embodiment of the invention, the at least one metal core board comprises temperature sensors in the form of SMD thermistors.

According to an embodiment of the invention, the switch (S1) is configured to be closed if the control switch (S4) is closed, the said control switch (S4) when closed making connection externally with the said power supply rail, and wherein the switch (S5) is configured to be closed when the control switch (S4) is closed, except during repetitive intermittent durations wherein (S5) is opened in order to enable detection of the status of the control switch (S4).

According to an embodiment of the invention, the control means are adapted to compare the voltage (U3) at the second terminal with a threshold value and to move the switch (S1) from an OFF to an ON position if the voltage (U3) exceeds a determined threshold value.

According to an embodiment of the invention, the control means are adapted to compare the voltage (U3) at the second terminal with a threshold value and to move the switch (S1) from an OFF to an ON position if the voltage (U3) exceeds a determined threshold value or if the temperature sensor indicates that the temperature is increasing and is above a determined threshold.

According to an embodiment of the invention, the control means are adapted, by means of control inputs (110) and (108), to detect the type of installation between a dual battery type and a single battery type, and configured to, if input (110) is at a level indicating that (S4) is open (OFF) and input (108) is at a level indicating that (S4b) is closed (ON) meaning it is a Dual Battery type installation and that (S1) of the other safety device (1) is closed (ON), move the switch (S1) from an OFF to an ON position only if the temperature sensors indicate the temperature is rising and is above a determined threshold, and if input (110) is at a level indicating that (S4) is open and input (108) is at a level indicating that (S4b) is non-connected or open, meaning it is a Single Battery installation or that (S1) of the other safety device (1) is open (OFF), move the switch (S1) from an OFF to an ON position if the voltage (U3) exceeds a determined threshold value or the temperature sensors indicate the temperature is increasing and is above a determined threshold.

According to an embodiment of the invention, one of the inputs for control is connected, internally or externally, to an accelerometer, and configured so that if the accelerometer output is significantly changing, then the switch (S1) is opened when the difference (U1-U3) exceeds a first threshold, but when the accelerometer output is not significantly changing, then the switch (S1) is opened when (U1-U3) exceeds a second threshold, the second threshold being higher than the first threshold.

According to an embodiment of the invention, one of the inputs for control is connected, internally or externally, to an accelerometer, and configured so that if the accelerometer output is significantly changing or the difference (U1-U3) exceeds a determined first threshold but is below a second threshold corresponding to maximum values considered normal without short-circuit, then any switch-off signal is ignored, but when the accelerometer output is not significantly changing and (U1-U3) does not exceed the said first threshold or exceeds the said second threshold corresponding to normal levels indicating a short-circuit, then the said switch-off signal is enabled.

According to an embodiment of the invention, the device (1) is configured such that if the difference (U1-U3) exceeds a first threshold but is below a second threshold corresponding to maximum values considered normal without short-circuit, then any switch-off signal is ignored.

The details of the invention and the advantages thereof will become apparent after reading the description wherein reference is made to the drawings wherein:
- Figure 1 shows the exterior of a possible embodiment of the safety device according to the invention,
- Figure 2 shows the bottom side of the safety device according to figure 1,
- Figure 3 shows the assembly of the metal core boards used in the device according to figures 1 and 2,
- Figure 4 shows the assembly inside the housing of the device, according to figures 1, 2 and 3, of the metal core boards, the flexible circuit, and the control board by means of studs providing the safety device terminals, and
- Figure 5 shows a functional block of an electrical system for a vehicle, with one battery, including the means for comparing the voltage (U3) with the voltage U1 and the amplifier, and the control board with switch (S5).

According to the present invention, the safety device to be used in a vehicle comprises a certain chosen number of MOSFETS with certain chosen characteristics, various voltage measurement devices, a differential amplifier and an accelerometer, and means, such as a switch, of making a second connection between internal power supply (usually control board ground) and external power supply (usually battery negative), adapted to work together to provide an improved safety device.

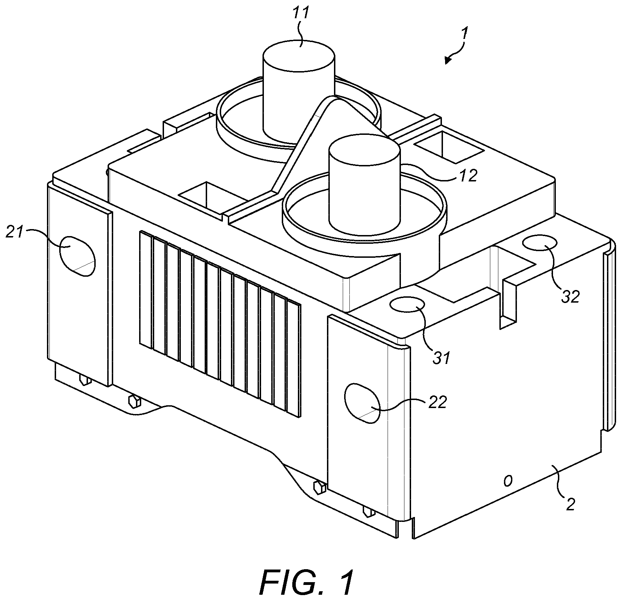

Figure 1 shows the exterior of an embodiment of the safety device 1 according to the invention. The safety device 1 comprises a housing 2 which protects the several components of the safety device 1. The housing normally comprises plastic material and can be obtained by means of an adapted moulding process.

At the top of the safety device 1 a first 11 and a second 12 terminal are visible. These terminals 11, 12 comprise any adapted material, such as copper. The first terminal 11 is adapted to be connected to the battery positive in an electrical system of a vehicle. The second terminal 12 is adapted to be connected to the vehicle positive in the said electrical system. Inside the safety device 1 a switch (S1) is present for allowing switching off the connection between the battery and parts of the electrical system in order to avoid dangerous situations which could occur having the battery connected.

The safety device 1 is provided with a first 21 and a second 22 through hole which provide means for fixing the safety device 1 on a support in a vehicle using, for instance, bolts or any other adapted fixing means.

The safety device 1 comprises also a third 31, a forth 32, a fifth 31b and a sixth 32b through hole which provide alternative means for fixing the safety device 1 on a support in a vehicle (only two of these four additional through holes are clearly visible in figure 1). As shown in figure 1, the direction of the trough holes 21, 22 is essentially perpendicular to the direction of the through holes 31, 32. This means that a user has at least two different options available for fixing the safety device 1 on an adapted support in the vehicle.

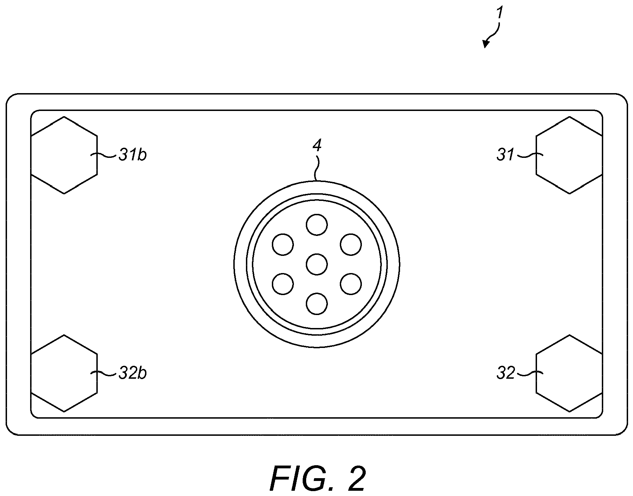

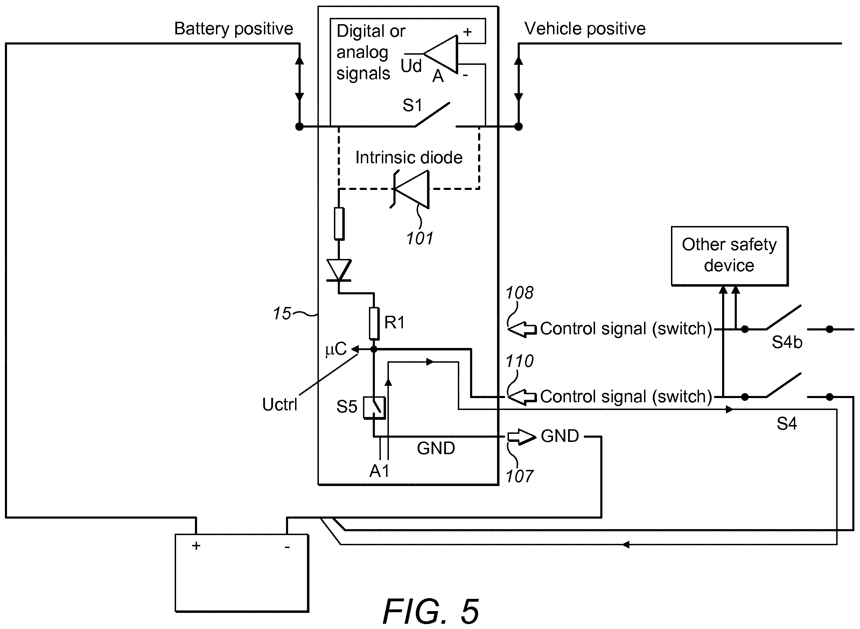

Figure 2 shows the bottom part of the safety device 1 according to figure 1. This bottom part is provided with a connector 4 having seven signal pins. The use of the pins is explained with reference to figure 5.

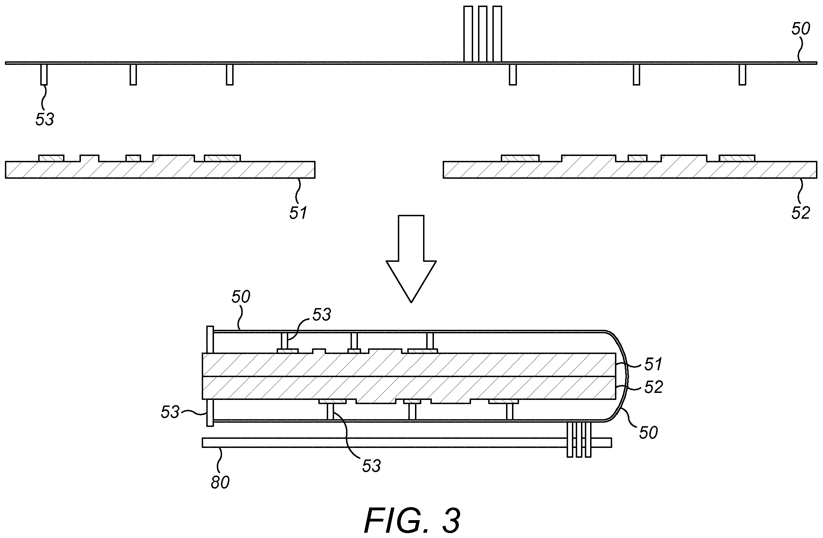

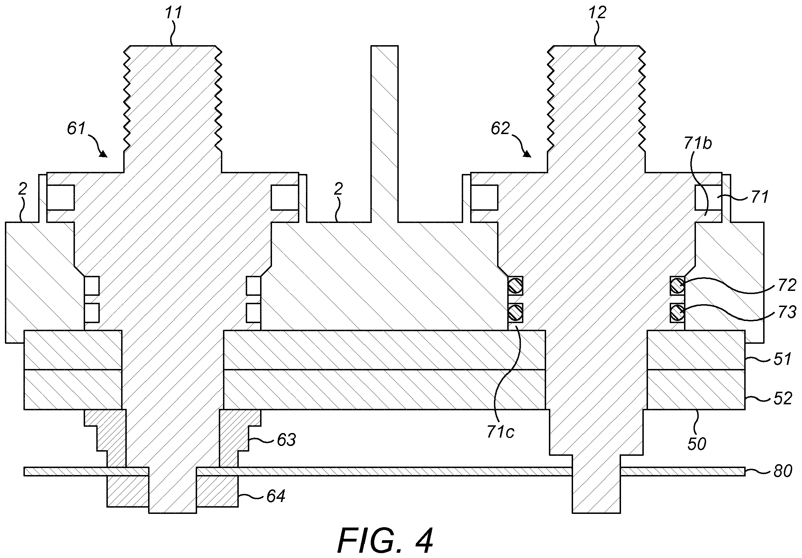

Inside the safety device 1 of figures 1 and 2 a power switch (S1) is present and several other elements to control the switch (S1). The assembly of the metal core board inside the safety device 1 is shown in figure 3 and figure 4. As shown in figure 3, in a first step a flexible circuit 50 is fixed on a first 51 and a second 52 metal core board, and conducting areas of the flexible circuit 50 are connected to the conducting areas of the metal core board by means of surface mounted connecting pins 53. In a second step the flexible circuit is folded as the metal core boards 51, 52 are positioned back-to-back.

The fixing of the metal core boards 51, 52 on top of each other is shown in figure 3 and 4. The metal core boards 51, 52 are assembled back-to-back using connecting studs 61, 62 passing through both boards 51, 52. The top portion of the studs 61, 62 provide the terminals 11 and 12, respectively.

The studs 61, 62 incorporate a threaded part for a flange nut 63 which allows to clamp both boards 51, 52 between, on one side the flange nut and on the other side the inside of the housing 2, as well as on the inner surface 71c of the stud 61, 62, thus making power connections (both electrical, mechanical and thermal) on both boards 51, 52. This clamping, by applying torque on the nut 63, simultaneously fastens the studs by clamping the part 71b against the outside of the housing Applying torque on the nut 63 also aligns the stud surface 71c with the inside of the plastic housing 2.

The studs 61, 62 are each provided with empty space 71 allowing the radius 71b to bend up acting as washer. Moreover, the studs comprise notches 72 and 73 for receiving O-rings.

As alternative embodiment, a fastening nut can be used on the outside of the housing instead of the part 71b. In the through holes, plastic cylinders could be used to insulate between the studs and the metal core.

The control board 80 is mounted, making connection, against the back of the flanged nut 63 and furthermore allowing receiving the eight contact pins of a flexible circuit 50 in the eight holes of the control board 80 (see figure 3). Thereafter a further nut 64 is fastened to hold the control board 80 in place.

In a final step the contact pins of the flexible circuit 50 are soldered on the control board 80.

As shown in figure 4, by fastening the nuts 63, the effect is that the metal core board 51, the metal core board 52 and the studs 61, 62 are all fixed and properly interconnected. Stacking the metal core boards 51, 52 in this way, has the result that the studs 61, 62 will be close to the switching elements (the MOSFETs), which allows for a low global ON-resistance. In addition, with the amplifier 102, (see figure 5), on the flexible circuit 50 above the upper metal core board 51, the amplifier 102 is protected against parasitic noise which may come from the control board and / or from the outside of the safety device 1.

Figure 5 shows a functional block of the safety device 1 according to the present invention in the electrical system of a vehicle. In figure 5, the rectangle 15 indicates the elements that are part of the safety device 1. The elements outside the rectangle 15 form part of the electrical system of the vehicle.

Figure 5 shows the example of a safety device 1 installed on the positive side of the power supply, i.e. terminal 11 is connected to Battery Positive and terminal 12 to Vehicle Positive. The same functions can also be achieved if using a safety device 1 on the negative side. However, for ADR vehicles, regulations require a safety device 1 on the positive side.

Figure 5 shows a typical "Single Battery" installation. This means that the vehicle's electrical system is supplied with current from a single common point on the battery side of the safety device 1.

In commercial vehicles, such as trucks or buses, it is increasingly common to use a "Dual Battery" installation. In such an installation, the vehicle's electrical system is supplied with current from two separate points, typically one point connected to terminal 11 of a first safety device 1 and a second point connected to terminal 11 of a second safety device 1. The two output terminals 12 may, for optimum performance and wiring efficiency, be permanently connected together.

In below descriptions, a distinction is made as certain functionalities, according to the present invention, are differentiated depending on the type of installation.

In the present text, reference is made to the "power supply rail". It should be understood that the power supply rail can either be the negative or the positive. If the first terminal 11 is connected to the positive, than the connection 107 will be the negative. If the first terminal 11 is connected to the negative, than the connection 107 will be the positive.

The safety device 1 comprises a switch (S1) which, according to the present invention, is obtained by using MOSFETS. To obtain S1, MOSFETS are chosen and are mounted in a single direction, in order to obtain an intrinsic diode 101 in the safety device. The diode is represented in Figure 5 although it is not a separate element, but part of the MOSFETS.

Referring to figure 1, the first terminal 11 of the safety switch 1 is connected to the battery positive. The second terminal 12 is connected to the vehicle positive. Between the first 11 and the second 12 terminals, the safety device comprises an amplifier 102 which is connected to an analogue-digital converter. The seven pins which are present on the bottom of the safety device (see figure 2) are respectively connected to:
- 104 the auxiliary power output (ECU, tachograph),
- 105 the alternator / generator shut-off,
- 106 the alternator / generator optional,
- 107 battery negative,
- 108 control signal (switch or CAN bus),
- 109 control signal (switch or CAN bus),
- 110 control signal (switch).

In the functional block of figure 5, the battery is indicated with reference number 120. The battery positive provides current towards vehicle positive, comprising alternator and starter motor, only via (S1) when (S1) is closed. "µC" is the CPU.

The reasons for using MOSFETS in the way described in the safety device 1, in combination with specific sensors, are described below.

There are a number of problems and risks related to the use of electrical circuits, in particular electrical circuits used in vehicles.

One of those risks is that friction or clamping on cable insulation, may cause short-circuit on the main (generally unfused) "vehicle positive" battery power line. This in turn can cause fire or explosion.

In electrical systems according to the prior art, separate current intensity sensors, installed on the battery pole, and sometimes part of the battery cable, are used to measure the current. The sensors could be used to detect short circuits. However, these sensors usually do not cover the range of main short-circuit intensities (above 1500 A). An example can be found in document US 4,675,255.

Also, these current sensors are located on one battery only, and therefore cannot be used to monitor current and temperature when there are two, three or four batteries on the vehicle. Furthermore, battery replacement becomes complicated, as it requires re-installing the sensors with precision.

In addition, these sensors require a centralized computer to apply current intensity thresholds (or current-time diagrams). Such a remote computer will often be inoperative (due to instable voltage supply) in a critical situation, where the overcurrent protection needs to be active.

Also, electro-mechanic/galvanic switches are not capable of breaking high short-circuit current for the following two reasons:
1) to switch off, many switches require the supply of voltage above a certain level, which in severe short circuit situations is missing due to voltage drop inside the battery,
2) even if they can start to open the circuit, many switches will be destroyed by arcing because of the current level, and hence will not break the current.

According to the present invention, an amplifier 102 is used, both at final testing with known current levels and temperatures, and after installation.

The output of the amplifier is used to measure precisely the voltage drop across (S1), which can be used to evaluate the current intensity, also by using the thermistor signals and looking up the calibration values stored during final testing, and the CPU compares the evaluated current intensity to the maximum acceptable level. The number of MOFSETS and their characteristics are chosen, together with overcurrent and over-temperature-thresholds, so that there will be no ageing of the MOSFETS which could modify the pre-determined relation (calibration values) between voltage drop and current intensity. Furthermore, the number and type of MOSFETS is selected in such a way, that the initial temperature dependence of the metal core board temperature sensors (reflecting also ambient temperature) has a constant relation to the threshold adaptation that the CPU should apply (knowing that required cranking energy, in other words the maximum current level which may occur without short-circuit or stall, decreases when temperature increases), and that secondly the internal limit of acceptable current (related to MOSFET conducting capacity) corresponds to the maximum normal intensity of the external application, to protect both the electrical system of the vehicle and the integrity of the MOSFETS inside the switch, using the same value of the threshold.

At higher ambient temperatures, less cranking current will be needed over less time (because oil is more fluid etc.). And, correspondingly, at higher temperatures of transistor junctions and of copper traces, (Ud) will be higher (due to higher ON-resistance) and the temperature signal from the metal core board sensors will also be higher. Thus, the current at which (Ud) exceeds the circuit breaker threshold, adapted according to metal core board temperature, is lower, when the normal maximum current intensity value also is lower. Hence matching internal and external current intensity limits.

To make this correspond precisely to the internal as well as the external limits of what can be accepted as normal current intensity, the metal core board is dimensioned so that the temperature will rise at a determined rate. The maximum value of current intensity which can be considered as normal (considered as not short-circuit), will be lower if the duration of this current is longer. When duration is longer, the temperature will also be higher due to temperature rise of the board, and thus (Ud) will reach the threshold, hence adapting the circuit breaker function to the duration.

Furthermore, it is possible, by defining a board (heat-sink) with well-defined characteristics, to use the rate of temperature increase (dT/dt) to estimate the power dissipated inside the MOSFETS. This can also be used to refine the circuit breaker internal protection function.

By CAN bus, it is possible, each time a major load is activated or deactivated by the vehicles control system, to send information about the expected (normal) current intensity level to the safety device. If the measured current intensity change exceeds the expected level, it means there is an overcurrent or short-circuit situation. Also anomalies such as failing load thus undercurrent, can be detected in this way.

In a typical vehicle, the current during cranking (starting) is much higher than the maximum load current without cranking. An accelerometer is used to adapt threshold in the following way. If the accelerometer output shows a significant variation, this indicates that the truck is moving or that the engine is running, and then it can be assumed that there will be no cranking current. The threshold could then, for example, be set to 300A. When the accelerometer output does not present any variation, as when the truck is not moving and the engine is not running, since at least two seconds for example, then the threshold can automatically be set to 1500A. Motion can be detected by comparing accelerometer output level to previous output levels. Lowering the threshold when truck is known to be running is a manner to make the protection against short circuit (thus fire) more efficient.

Alternatively, the information indicating that the truck is running could, for example, come from a signal "Ignition" (provided by the vehicles electrical system). This signal could then be used, instead of the accelerometer, to automatically change thresholds. But then it needs to be verified whether this signal is correctly connected. and also implies the need for one more wire to route in the vehicle. Therefore, it is practical to use an integrated accelerometer.

A further problem for which the present invention provides a solution, are abrupt changes in electrical load, due to a fuse action or other excessive load switching. These abrupt changes can lead to damage on ECUs.

According to the prior art, as example, a zener diode is used, associated with the alternator. However, at heavy load dumps, such a diode will often be destroyed while it conducts.

By placing a safety device according to the invention, both on "battery positive" and "battery negative" sides, the electrical system will be completely protected against large load dump energy or other sources of over- or under-voltage transients, by the two intrinsic diodes (one on positive and one on negative side).

It is known that roll-over can cause flammable liquid to pour out and be ignited by hot surfaces or sparks caused by short-circuits. In case of a motor yacht, rollover can lead to similarly dangerous situations, and failure of battery power can reduce the possibilities to send out an alarm indicating the occurrence of an accident and to signal the location of the motor yacht.

On hybrid busses, rollover can lead to dangerous exposure and accessibility of high-voltage elements (usually placed on the roof).

According to the prior art, the rollover detector and the safety device are two separate units. One problem related to this solution is the connection between the two, which presents a possible failure.

Rollover detectors exist, which can send a signal to a safety device to turn it off. However, this requires that the connection between the two is able to function after the accident, and requires power supply to the rollover detector. The overall system cannot fully benefit from the rollover detector, because it cannot be certain that the rollover sensor is actually connected to the safety device.

According to the invention, for instance when used in a motor yacht, if a roll-over is detected by a sensor integrated in the safety device, the batteries main line can be automatically opened (S1 OFF) and an auxiliary power feed output can be used to activate a radio alarm. In this way, it is possible to avoid fire due to damaged electrical cables or leaking fuel, and also to guarantee a long-lasting power supply for the alarm, which is not endangered by short-circuits on "vehicle positive". In case of "man-overboard", the switch could be used to stop the engine, by switching off not only (S1) but also the alternator field current circuit. This is to avoid that the boat continues to sail far away from the person in the water.

For hybrid busses, the safety device can be used to switch-off the high voltage circuits: for example, the switch (main output/S1 or auxiliary output) can be used to provide power (from the 12V/24V batteries) to the control circuits for the HV elements (>600V Hydrogen Nitrogen batteries). In case of rollover, the HV elements can be deactivated by the switch being turned off due to rollover detection. The high voltages sometimes require a few minutes to be safe after initial switch-off. This way, if the HV deactivation is initiated for example 5 seconds after a rollover incident, then the HV elements may be safe by the time the rescue team arrives at the location of the bus. This functionality is especially important since, when rolled-over, these elements on the roof will be on the side, thus accessible to people, who may not be conscious of the danger. It is also possible to use the auxiliary power feed to activate a foam generator, to protect sensitive parts against fire.

A further existing problem related to electrical systems is the failure of ground connection ("battery negative") to a safety device. This can lead to load dump or to destruction of the safety device or again to abrupt loss of power available for the lights while a truck is running.

Typically, and according to prior art, one side (usually positive) of the power supply for the control board is connected internally to the stud forming terminal 11, and the other side (usually negative or 'ground') of the power supply for the control board is connected externally via a smaller wire.

If the external connection between battery and terminal 11 fails, then the power feed towards the terminal 12 is interrupted, so it's of little importance that the control board stops functioning. Also, the connection between battery and terminal 11 is, by its size, relatively reliable. However, the smaller wire connection, providing the other side or "rail" of the power supply voltage for the control board, may fail due to vibration or bad installation.

According to the prior art, if the safety device consists of a simple relay for (S1), then this relay will in the described situation (loss of power supply) immediately resume its "normally closed" or "normally open" state, potentially causing load dump and/or loss of power to vehicle or again supply of power in an explosive atmosphere which presents risk of fire.

A better way to avoid loss of power due to missing GND (battery negative) connection can be obtained as follows, referring to Figure 5:
- the control board comprises a control input 110 to be used for a control switch, which, when closed, connects the control signal input of the safety device to external power supply (usually battery negative),
- the safety device is designed to interpret a closed control switch (usually corresponding to a low signal on this line), as a command to switch ON (that is, to close S1). When the safety device's CPU (microcontroller) receives such an ON command (Uctrl at 110 is low), then it will also close the switch S5 (which can be realized by a small FET transistor). S5 is situated between the control switch and the internal ground or 'GND'. This ground is permanently connected 107 to the power supply (usually battery negative), so when S5 closes, there is a second supply of GND. The resistor R1 pulls up the potential of Uctrl at 110, so that, by re-opening S5 for example during 0.1ms every 10ms, then the safety device CPU can detect any open (OFF command) state of the control switch:
   - when the truck is running, the control switch will normally always be closed (ON). If the permanent GND connection is broken while the truck is running, which could be a dangerous situation for the truck on the road as well as for the safety device's integrity, then the control switch still provides a second GND path. When the control switch is opened while the permanent GND connection is broken, the safety device's switch (S1) goes OFF and cannot be turned ON until the broken GND connection has been repaired;
   - as an additional measure to make sure the safety device ON state cannot be modified due to failing connections while the truck is running, the accelerometer can be used to detect if the vehicle is running, and if so inhibit any switch-off command input from the manual control switch; and
   - the switch (S5) can alternatively be closed also during OFF (S1 open), however, since it connects an external signal directly to ground, it would be necessary to use a fuse for the possibility that the external signal 110 by mistake is connected to battery positive. By requiring that the control switch input 110 be low before closing (S5), it is certain that the installation is correctly made, so a fuse on 110 will not be necessary.

Yet another problem for which the safety device provides a solution, is the fact that if a battery switch-off command is generated by error, this could lead to the destruction of the safety device if it conducts cranking current (starter motor active). The reason here for is that if it is active, the starter motor will represent a high inductive energy, which may destroy the MOSFETS if they are turned OFF (S1 opens).

According to the invention, the difference (U3-U1) or (Ud) (see above) is used to inhibit switch-off by manual control switch during normal cranking (starter motor) current levels. If the current level is above normal, then it is likely to be a short-circuit, which does not have much inductive energy stored, so then an automatically generated switch-off can result as usual by the circuit breaker function.

Another problem that could occur and for which the safety device according to the invention provides a solution is a failing of oil pressure which can damage the engine. This can be caused by rollover of the vehicle, disrupting the normal flow of oil.

In the safety device according to the invention, the accelerometer is used to detect rollover, and the main line from the battery is opened but also the alternator/generator is de-energized, which, after a few seconds, will stop the engine. This functionality is especially useful for big machines with expensive engines.

A further problem relating to electrical systems is the fact that incomplete charge of a starter battery could occur due to premature switch-off in a dual battery system.

According to the prior art, after starting the engine, both the starter battery and the house battery are charged simultaneously. The charging of the starter battery will be disturbed by the charge level of the house battery. When the starter battery is considered to have recovered enough charge, it is switched off and after that only the house battery is being charged.

According to the invention, by implementing (S1) by MOSFETS in one direction only, the charge can be improved. Here, intrinsic diodes for trickle charge are used. Instead of using "back-to-back" MOSFETS, which would block current in both directions, the current is blocked only in one direction. So, when the starter battery is switched off (and the house battery is ON), the trickle charge is still fed to the starter battery through the intrinsic diodes. The MOSFETS are chosen to achieve an adequate voltage drop across the intrinsic diode, so the trickle charge current will be sufficiently low. This means charge is better maintained at the starter battery, while the service battery can be efficiently recharged. It is also a good way to optimize the charge of both batteries simultaneously.

Alternatively, two safety devices or two switches (S1) are used, one from the starter battery to vehicle positive, the other from the house battery to vehicle positive.

The safety switch according to the invention comprises means to automatically adapt the function of the switch to the type of installation.

A vehicle may have two independent batteries, each associated with a safety device, and the outputs (terminal 12) of the two safety switches are then preferably connected together. Auxiliary outputs from each of the safety devices can also be connected together, each in series with a diode, so that if one battery is low (due to cranking for example), then the other battery is able to feed the electronics of the vehicle.

In order to detect such a vehicle installation and adapt to it, two control switch inputs (110, 108) are provided; for control switches (S4) and (S4b) respectively.

According to the present invention, it is possible to connect the first safety device to (S4) and (S4b), and use (S4) as control and (S4b) as information about the status (ON or OFF) of the other safety switch, and to connect the second safety device to (S4) and (S4b), and use (S4b) as control, and (S4) as information about the status of the other safety switch.

To properly manage the alternator, each safety device should deactivate the alternator only if itself is OFF and the other safety switch also is OFF.

In a dual battery configuration, one battery (with S1 ON) may in some situations discharge towards the other battery (with S1 OFF thus via the intrinsic diode).

According to the invention, thermistors are used, especially those in the middle (of lower metal core board as well as on upper metal core board) to detect internal overheating.

In case the temperature continues to rise above a critical level after switching off (S1), then (S1) is switched ON to avoid destruction of the safety device.

Also, the detection of safety device being connected in the wrong way should be adapted to this type of vehicle. If a safety switch sees that the other safety device is in ON status, then the detection of wrong way connection using voltage level should be inhibited and only the temperature sensors signal should be used to detect wrong way connection and to consequently switch on (S1).

A further problem is that excessive discharge of batteries can shorten the life-time of the battery, or make it impossible to start the vehicle.

In order to solve this problem, according to the prior art, safety devices measure the voltage and disconnects the battery below a certain voltage.

A problem exists that this automatic disconnect must be prevented while the truck is running, otherwise the driver may find himself without light for example.

According to the present invention, the accelerometer (which also serves for rollover detection) is used to detect if the vehicle is stopped and thus if so, then the battery can automatically be disconnected to prevent excessive discharge (excessive discharge not only makes it impossible to start, but also ages the battery). As example, the safety device can be configured in such a way that, only after 3 minutes without significant change of accelerometer output, the automatic disconnect is enabled. One of the specific advantages of the safety device 1 according to the present invention relates to the fact that the safety device could be connected in the wrong way, i.e. wrongly connecting terminal 12 to battery and terminal 11 to the loads in the vehicle's electrical system. Connecting the safety switch in the wrong direction, can lead to excessive current through the intrinsic diode, which can destroy the MOSFETS (thus S1).

Protection against connecting in the wrong way can be achieved by using the voltage (U3) or (Ud). If U3 is high or (Ud) is low when the switch is OFF, then, for single battery installations, this means that the safety device is connected in the wrong way. (For practical design reasons, a circuit is added between the output of the amplifier 102 and the ADC, in order to add an offset to the output, so that it always stays above 0 volt).

As shown in figure 5, the amplifier 102 (generating (Ud)) is powered via diode from Source (Vehicle positive), in order to avoid consumption in OFF state. However, in order to use the amplifier 102 also to detect wrong way of installation, the amplifier can instead be powered from both Drain (battery positive) and Source (battery negative). However, for Dual battery installations, only the previously described use of the temperature sensors (for example thermistors) will achieve full protection.

A further use of the safety device of the invention is especially useful for trucks which are not using a Dual battery system. Such a truck's battery may sometimes be discharged and incapable of cranking. This situation requires help from an assisting vehicle, by connecting a power source voltage to the failing truck. Sometimes the failing truck has a special connection, jumper start stud, for this connection.

Usually it is recommended to make the connection (between the two vehicles) on the battery side of the switch, in order to protect the electrical system from voltage transients etc. (the battery helps to stabilize the voltage). However, in some ADR vehicles (carrying dangerous liquids), it is preferred to build the truck with the jump start socket on the load side (vehicle positive side) of the switch. This is because of the ADR regulations, which prohibit conductive parts (such as jump start stud) permanently connected to the battery. So there is a conflict between, on one hand, good practice for the electrical system, and, on the other hand, good ADR practice.

According to the invention, the safety device's switch (S1) is designed using MOSFETS as described, so that the jump start connection stud can be on the output side of the switch, thanks to the mechanism here described.

Comparing U3 to a determined threshold is then used to detect appearance of a high voltage on the terminal 12 (vehicle positive) when the switch is OFF (S1 open). The CPU of the control board then draws the conclusion that it's a jump start.

The said determined threshold can also be dependant of the voltage U1. As an example, U3 is required to be higher than U1 + 0,5 V, in order to draw the conclusion that there is a jump start.

It is also possible to condition this conclusion, by having previously detected a discharge situation (see above functions).

When the CPU comes to the conclusion that there is a jump start, then the switch (S1) is switched on, overruling the command from the control switch (S4).

This way, when there is no jump start, the jump start connection stud remains non-connected to the battery when the switch is OFF, this is good for ADR. And when there is a jump start, the jump start connection stud is rapidly (a few ms) connected to the battery, which is good for the electrical system.

Also during the few ms turn-ON time, the electrical system is protected, thanks to the intrinsic diode. The MOSFETS will be so selected, that the intrinsic diode can withstand, during at least a few ms, the current intensity which can be expected to flow from jump starting battery to discharged battery.

This continuous protection is especially important, since the manual connection of jump start clamp, can cause severe sparking thus voltage transients.

Furthermore, the safety device according to the invention is so configured that it does not switch ON (S1) if the voltage exceeds that for which the MOSFETs are designed.

Usually, MOSFETS must be designed to cope for jump start connection voltage and possible misconnection, which can bring the voltage to 48V in a 24V system. This requires use of typically 60V MOSFETs. According to the present invention, as soon as a high voltage is detected on one of the studs, the MOSFETS which constitute the switch (S1), are turned ON. Therefore there can be no breakdown, and it is possible to use for example 40V MOSFETs instead of 60V.

Another reason for over-dimensioning MOSFETS is the load dump energy caused by alternator output overvoltage. However, with an intrinsic diode formed by many MOSFETS in parallel, and by automatically switching off the alternator field winding current before switching off (S1), also this problem can be solved, and hence lower voltage MOSFETs can be used.

In the circuit for alternator de-energization, a certain voltage and current should appear. This can be measured on the connecting points of the field winding, or again between the legs of a PTC used as overcurrent protection on the field winding.

If there is no voltage on these points, the CPU will consider that the ignition switch is OFF or that the alternator is not correctly installed, and will inhibit switch ON of (S1).

According to the invention, the thermistors (temperature sensors) can also be used to detect a loose power cable. There are six temperature sensors on the metal core boards, on each board there is one in the center, one near terminal 11 and one near terminal 12. If the sensor near one of the terminals 11, 12 indicates a temperature higher than at the center and than at the other terminal 11, 12, then the CPU can draw the conclusion that a power cable is loose.

## Claims

1. Safety device (1) for an electrical system of a vehicle, wherein the safety device (1) comprises a first connector or terminal (11) for connecting the battery voltage and a second connector or terminal (12) for connecting the vehicle voltage and control means adapted to know the difference (U3-U1) of voltage between the first (11) and second terminal (12), wherein the safety device (1) further comprises a housing (2) and at least one metal core boards (51, 52) in contact with the first (11) and the second (12) terminals respectively, wherein the safety device (1) further comprises inputs for power supply rail and for control, the safety device (1) further comprising a switch (S1) for switching off the connection between the first (11) and second (12) terminals, the switch (S1) being actively connected to means for operating the switch (S1) based on at least a first of:
- the voltage at the first terminal (11);
- the voltage at the second terminal (12); and
- the voltages at the inputs;
and wherein the switch (S1) comprises at least two MOSFET transistors, wherein the MOSFET transistors are mounted on the metal core boards (51, 52) and are connected in parallel and in a single direction in order to obtain an intrinsic diode between the first (11) and the second (12) terminal of the safety switch (1).

2. Safety device (1) according to claim 1, wherein the control means comprise a circuit to measure the voltage (U1) at the first terminal (11), a circuit to measure the voltage (U3) at the second terminal (12) and an amplifier (102) to produce an amplified signal (Ud) of the difference of voltage between the first (11) and second (12) terminals.

3. Safety device (1) according to claim 1 or 2, wherein the safety device (1) comprises two metal core boards (51, 52) and a flexible circuit (50) provided with connecting pins for connection with the first (51) and the second (52) metal core board, the metal core boards (51, 52) being connected one to the other, and mounted back-to-back, to allow mechanical contact between the cores of said metal core boards (51, 52).

4. Safety device (1) according to any of the preceding claims, wherein the safety device (1) comprises a first (61) and second stud (62), the studs (61, 62) each comprising a first part (71b) adapted to be fixed against the outside of the housing (2) and providing a protrusion to form the first (11) and second (12) terminal, the studs (61, 62) comprising a second part adapted to pass through holes in the housing (2) and adapted to pass through holes in the at least one metal core board (51,52), wherein said second parts of the studs (61, 62) are adapted to receive fixing means such as a flange nut (63), for fixing the at least one metal core board (51, 52) against the inside of the housing (2), each stud comprising a third part (71c) aligning, in the axial direction of the through holes and as a result of fastening the nut (63), with the inside of the housing (2) to clamp on the at least one metal core board (51, 52).

5. Safety device (1) according any of the preceding claims, wherein the at least one metal core board (51, 52) comprises temperature sensors in the form of SMD thermistors.

6. Safety device (1) according to any of the preceding claims, comprising a further switch (S5), positioned between the input for power supply rail and the input for control provided by an external control switch (S4), wherein the switch (S1) is configured to be closed if the control switch (S4) is closed, the said control switch (S4) when closed making connection externally with the said power supply rail, and wherein the switch S5 is configured to be closed when the control switch (S4) is closed, except during repetitive intermittent durations wherein (S5) is opened in order to enable detection of the status of the control switch (S4).

7. Safety device (1) according to any of the preceding claims, wherein the control means are adapted to compare the voltage (U3) at the second terminal (12) with a threshold value and to move the switch (S1) from an OFF to an ON position if the voltage (U3) exceeds a determined threshold value.

8. Safety device (1) according to claim 5 or 6, wherein the control means are adapted to compare the voltage (U3) at the second terminal (12) with a threshold value and to move the switch (S1) from an OFF to an ON position if the voltage (U3) exceeds a determined threshold value or the temperature sensor indicates that the temperature is increasing and is above a determined threshold.

9. Safety device (1) according to claims 5 or 6, wherein the control means are adapted, by means of control inputs (110) and (108), to detect the type of installation between a dual battery type and a single battery type, and configured to, if input (110) is at a level indicating that (S4) is open (OFF) and input (108) is at a level indicating that (S4b) is closed (ON) meaning it is a Dual Battery type installation and that (S1) of the other safety device (1) is closed (ON), move the switch (S1) from an OFF to an ON position only if the temperature sensors indicate the temperature is rising and is above a determined threshold, and if input (110) is at a level indicating that (S4) is open and input (108) is at a level indicating that (S4b) is non-connected or open, meaning it is a Single Battery installation or that (S1) of the other safety device (1) is open (OFF), move the switch (S1) from an OFF to an ON position if the voltage (U3) exceeds a determined threshold value or the temperature sensors indicate the temperature is increasing and is above a determined threshold.

10. Safety device (1) according to any of the preceding claims, wherein one of the inputs for control is connected, internally or externally, to an accelerometer, and configured so that if the accelerometer output is significantly changing, then the switch (S1) is opened when the difference (U1-U3) exceeds a first threshold, but when the accelerometer output is not significantly changing, then the switch (S1) is opened when (U1-U3) exceeds a second threshold, the second threshold being higher than the first threshold.

11. Safety device (1) according to any of the preceding claims, wherein one of the inputs for control is connected, internally or externally, to an accelerometer, and configured so that if the accelerometer output is significantly changing or the difference (U1-U3) exceeds a determined first threshold but is below a second threshold corresponding to maximum values considered normal without short-circuit, then any switch-off signal is ignored, but when the accelerometer output is not significantly changing and (U1-U3) does not exceed the said first threshold or exceeds the said second threshold corresponding to normal levels indicating a short-circuit, then the said switch-off signal is enabled

12. Safety device (1) according to any of claims 1 to 9, wherein the device (1) is configured such that if the difference U1-U3 exceeds a first threshold but is below a second threshold corresponding to maximum values considered normal without short-circuit, then any switch-OFF signal is ignored

## Patentansprüche

1. Eine Sicherheitsvorrichtung (1) für ein elektrisches System eines Fahrzeugs, wobei die Sicherheitsvorrichtung (1) Folgendes beinhaltet: einen ersten Verbinder oder Anschluss (11) zum Verbinden der Batteriespannung und einen zweiten Verbinder oder Anschluss (12) zum Verbinden der Fahrzeugspannung und Steuermittel, die angepasst sind, um den Spannungsunterschied (U3-U1) zwischen dem ersten (11) und dem zweiten Anschluss (12) zu kennen, wobei die Sicherheitsvorrichtung (1) ferner ein Gehäuse (2) und mindestens eine Metallkernplatte (51, 52) in Kontakt mit dem ersten (11) bzw. dem zweiten (12) Anschluss beinhaltet, wobei die Sicherheitsvorrichtung (1) ferner Eingänge für eine Stromversorgungsschiene und für eine Steuerung beinhaltet, wobei die Sicherheitsvorrichtung (1) ferner einen Schalter (S1) zum Trennen der Verbindung zwischen dem ersten (11) und dem zweiten (12) Anschluss beinhaltet, wobei der Schalter (S1) aktiv mit Mitteln zum Betätigen des Schalters (S1) auf der Basis von mindestens einer ersten von Folgendem verbunden ist:
- der Spannung an dem ersten Anschluss (11);
- der Spannung an dem zweiten Anschluss (12); und
- den Spannungen an den Eingängen;
und wobei der Schalter (S1) mindestens zwei MOSFET-Transistoren beinhaltet, wobei die MOSFET-Transistoren an den Metallkernplatten (51, 52) montiert und parallel und in einer einzigen Richtung verbunden sind, um zwischen dem ersten (11) und dem zweiten (12) Anschluss des Sicherheitsschalters (1) eine intrinsische Diode zu erhalten.

2. Sicherheitsvorrichtung (1) gemäß Anspruch 1, wobei die Steuermittel Folgendes beinhalten: eine Schaltung zum Messen der Spannung (U1) an dem ersten Anschluss (11), eine Schaltung zum Messen der Spannung (U3) an dem zweiten Anschluss (12) und einen Verstärker (102) zum Produzieren eines verstärkten Signals (Ud) des Spannungsunterschieds zwischen dem ersten (11) und dem zweiten (12) Anschluss.

3. Sicherheitsvorrichtung (1) gemäß Anspruch 1 oder 2, wobei die Sicherheitsvorrichtung (1) Folgendes beinhaltet: zwei Metallkernplatten (51, 52) und eine flexible Schaltung (50), welche mit Verbindungsstiften zur Verbindung mit der ersten (51) und der zweiten (52) Metallkernplatte versehen ist, wobei die Metallkernplatten (51, 52) miteinander verbunden sind und gegeneinander montiert sind, um einen mechanischen Kontakt zwischen den Kernen der Metallkernplatten (51, 52) zu ermöglichen.

4. Sicherheitsvorrichtung (1) gemäß einem der vorhergehenden Ansprüche, wobei die Sicherheitsvorrichtung (1) einen ersten (61) und einen zweiten Bolzen (62) beinhaltet, wobei die Bolzen (61, 62) jeweils einen ersten Teil (71 b) beinhalten, der angepasst ist, um gegen die Außenseite des Gehäuses (2) befestigt zu werden, und einen Vorsprung zum Bilden des ersten (11) und zweiten (12) Anschlusses bereitstellen, wobei die Bolzen (61, 62) einen zweiten Teil beinhalten, der angepasst ist, um durch Löcher in dem Gehäuse (2) zu führen, und angepasst ist, um durch Löcher in der mindestens einen Metallkernplatte (51, 52) zu führen, wobei die zweiten Teile der Bolzen (61, 62) angepasst sind, um Befestigungsmittel wie etwa eine Flanschmutter (63) aufzunehmen, zum Befestigen der mindestens einen Metallkernplatte (51, 52) gegen die Innenseite des Gehäuses (2), wobei jeder Bolzen einen dritten Teil (71 c) beinhaltet, der in der axialen Richtung der Durchgangslöcher und als Folge des Sicherns der Mutter (63) nach der Innenseite des Gehäuses (2) ausgerichtet ist, um auf der mindestens einen Metallkernplatte (51, 52) anzuklemmen.

5. Sicherheitsvorrichtung (1) gemäß einem der vorhergehenden Ansprüche, wobei die mindestens eine Metallkernplatte (51, 52) Temperatursensoren in Form von SMD-Thermistoren beinhaltet.

6. Sicherheitsvorrichtung (1) gemäß einem der vorhergehenden Ansprüche, beinhaltend einen weiteren Schalter (S5), positioniert zwischen dem Eingang für die Stromversorgungsschiene und dem Eingang für die Steuerung, bereitgestellt durch einen externen Steuerschalter (S4), wobei der Schalter (S1) konfiguriert ist, um geschlossen zu werden, falls der Steuerschalter (S4) geschlossen wird, wobei der Steuerschalter (S4), wenn geschlossen, eine externe Verbindung mit der Stromversorgungsschiene herstellt und wobei der Schalter S5 konfiguriert ist, um geschlossen zu werden, wenn der Steuerschalter (S4) geschlossen wird, mit Ausnahme repetitiver intermittierender Perioden, wobei (S5) geöffnet wird, um eine Erfassung des Status des Steuerschalters (S4) zu ermöglichen.

7. Sicherheitsvorrichtung (1) gemäß einem der vorhergehenden Ansprüche, wobei die Steuermittel angepasst sind, um die Spannung (U3) an dem zweiten Anschluss (12) mit einem Schwellenwert zu vergleichen und um den Schalter (S1) aus einer AUS- in eine EIN-Position zu bewegen, falls die Spannung (U3) einen festgelegten Schwellenwert übersteigt.

8. Sicherheitsvorrichtung (1) gemäß Anspruch 5 oder 6, wobei die Steuermittel angepasst sind, um die Spannung (U3) an dem zweiten Anschluss (12) mit einem Schwellenwert zu vergleichen und um den Schalter (S1) aus einer AUS- in eine EIN-Position zu bewegen, falls die Spannung (U3) einen festgelegten Schwellenwert übersteigt oder der Temperatursensor anzeigt, dass sich die Temperatur erhöht und sich über einer festgelegten Schwelle befindet.

9. Sicherheitsvorrichtung (1) gemäß den Ansprüchen 5 oder 6, wobei die Steuermittel angepasst sind, mittels Steuereingängen (110) und (108), um den Installationstyp zwischen einem Doppelbatterie-Typ und einem Einzelbatterie-Typ zu erfassen, und konfiguriert sind, um, falls Eingang (110) auf einem Niveau ist, das anzeigt, dass (S4) offen (AUS) ist, und Eingang (108) auf einem Niveau ist, das anzeigt, dass (S4b) geschlossen (EIN) ist, was bedeutet, dass es sich um eine Doppelbatterie-Typ-Installation handelt und dass (S1) der anderen Sicherheitsvorrichtung (1) geschlossen (EIN) ist, den Schalter (S1) nur dann aus einer AUS- in eine EIN-Position zu bewegen, falls die Temperatursensoren anzeigen, dass sich die Temperatur erhöht und sich über einer festgelegten Schwelle befindet, und falls Eingang (110) auf einem Niveau ist, das anzeigt, dass (S4) offen ist, und Eingang (108) auf einem Niveau ist, das anzeigt, dass (S4b) nicht verbunden oder offen ist, was bedeutet, dass es sich um eine Einzelbatterie-Installation handelt oder dass (S1) der anderen Sicherheitsvorrichtung (1) offen (EIN) ist, den Schalter (S1) aus einer AUS- in eine EIN-Position zu bewegen, falls die Spannung (U3) einen festgelegten Schwellenwert übersteigt oder die Temperatursensoren anzeigen, dass sich die Temperatur erhöht und sich über einer festgelegten Schwelle befindet.

10. Sicherheitsvorrichtung (1) gemäß einem der vorhergehenden Ansprüche, wobei einer der Eingänge für die Steuerung intern oder extern mit einem Beschleunigungsmesser verbunden ist und so konfiguriert ist, dass, falls sich der Beschleunigungsmesserausgang signifikant ändert, der Schalter (S1) dann geöffnet wird, wenn der Unterschied (U1-U3) eine erste Schwelle übersteigt, falls sich jedoch der Beschleunigungsmesserausgang nicht signifikant ändert, der Schalter (S1) dann geöffnet wird, wenn (U1-U3) eine zweite Schwelle übersteigt, wobei die zweite Schwelle höher als die erste Schwelle ist.

11. Sicherheitsvorrichtung (1) gemäß einem der vorhergehenden Ansprüche, wobei einer der Eingänge für die Steuerung intern oder extern mit einem Beschleunigungsmesser verbunden ist und so konfiguriert ist, dass, falls sich der Beschleunigungsmesserausgang signifikant ändert oder der Unterschied (U1-U3) eine festgelegte erste Schwelle übersteigt, aber unter einer zweiten Schwelle liegt, die Maximalwerten entspricht, die als normal erachtet werden, ohne Kurzschluss, jedes Trennsignal dann ignoriert wird, wenn sich jedoch der Beschleunigungsmesserausgang nicht signifikant ändert und (U1-U3) die erste Schwelle nicht übersteigt oder die zweite Schwelle übersteigt, die normalen Niveaus entspricht, was einen Kurzschluss anzeigt, das Trennsignal dann ermöglicht wird.

12. Sicherheitsvorrichtung (1) gemäß den Ansprüchen 1 bis 9, wobei die Vorrichtung (1) so konfiguriert ist, dass, falls der Unterschied U1-U3 eine erste Schwelle übersteigt, aber unter einer zweiten Schwelle liegt, die Maximalwerten entspricht, die als normal erachtet werden, ohne Kurzschluss, jedes Trennsignal dann ignoriert wird.

## Revendications

1. Dispositif de sécurité (1) pour un système électrique d'un véhicule, où le dispositif de sécurité (1) comprend une première fiche de connexion ou borne (11) pour la connexion de la tension de batterie et une deuxième fiche de connexion ou borne (12) pour la connexion de la tension de véhicule et des moyens de contrôle conçus pour connaître la différence (U3-U1) de tension entre la première (11) et la deuxième borne (12), où le dispositif de sécurité (1) comprend en sus un boîtier (2) et des au moins une cartes à coeur métallique (51, 52) en contact avec la première (11) et la deuxième (12) borne respectivement, où le dispositif de sécurité (1) comprend en sus des entrées pour le rail d'alimentation et pour le contrôle, le dispositif de sécurité (1) comprenant en sus un commutateur (S1) pour interrompre la connexion entre les première (11) et deuxième (12) bornes, le commutateur (S1) étant activement connecté à des moyens pour actionner le commutateur (S1) sur la base d'au moins une première tension parmi :
- la tension au niveau de la première borne (11) ;
- la tension au niveau de la deuxième borne (12) ; et
- les tensions au niveau des entrées ;
et où le commutateur (S1) comprend au moins deux transistors MOSFET, où les transistors MOSFET sont montés sur les cartes à coeur métallique (51, 52) et sont connectés en parallèle et dans une direction unique afin d'obtenir une diode intrinsèque entre la première (11) et la deuxième (12) borne du commutateur de sécurité (1).

2. Dispositif de sécurité (1) selon la revendication 1, où les moyens de contrôle comprennent un circuit afin de mesurer la tension (U1) au niveau de la première borne (11), un circuit afin de mesurer la tension (U3) au niveau de la deuxième borne (12) et un amplificateur (102) afin de produire un signal amplifié (Ud) de la différence de tension entre les première (11) et deuxième (12) bornes.

3. Dispositif de sécurité (1) selon la revendication 1 ou la revendication 2, où le dispositif de sécurité (1) comprend deux cartes à coeur métallique (51, 52) et un circuit flexible (50) pourvu de broches de connexion pour la connexion avec la première (51) et la deuxième (52) carte à coeur métallique, les cartes à coeur métallique (51, 52) étant connectées l'une à l'autre, et montées dos-à-dos, afin de permettre un contact mécanique entre les coeurs desdites cartes à coeur métallique (51, 52).

4. Dispositif de sécurité (1) selon n'importe lesquelles des revendications précédentes, où le dispositif de sécurité (1) comprend un premier (61) et un deuxième plot (62), les plots (61, 62) comprenant chacun une première partie (71 b) conçue pour être fixée contre l'extérieur du boîtier (2) et fournissant une saillie afin de former la première (11) et la deuxième (12) borne, les plots (61, 62) comprenant une deuxième partie conçue pour passer par des trous traversants dans le boîtier (2) et conçue pour passer par des trous traversants dans l'au moins une carte à coeur métallique (51, 52), où lesdites deuxièmes parties des plots (61, 62) sont conçues pour recevoir des moyens de fixation tels qu'un écrou à embase (63), pour fixer l'au moins une carte à coeur métallique (51, 52) contre l'intérieur du boîtier (2), chaque plot comprenant une troisième partie (71 c) s'alignant, dans la direction axiale des trous traversants et suite au serrage de l'écrou (63), avec l'intérieur du boîtier (2) afin de se serrer sur l'au moins une carte à coeur métallique (51, 52).

5. Dispositif de sécurité (1) selon n'importe lesquelles des revendications précédentes, où l'au moins une carte à coeur métallique (51, 52) comprend des capteurs de température sous la forme de thermistors CMS.

6. Dispositif de sécurité (1) selon n'importe lesquelles des revendications précédentes, comprenant un commutateur supplémentaire (S5), positionné entre l'entrée pour le rail d'alimentation et l'entrée pour le contrôle fourni par un commutateur de contrôle externe (S4), où le commutateur (S1) est configuré afin d'être fermé si le commutateur de contrôle (S4) est fermé, ledit commutateur de contrôle (S4), lorsqu'il est fermé, établissant une connexion de manière externe avec ledit rail d'alimentation, et où le commutateur S5 est configuré afin d'être fermé lorsque le commutateur de contrôle (S4) est fermé, sauf au cours de durées intermittentes répétitives où (S5) est ouvert afin de permettre la détection du statut du commutateur de contrôle (S4).

7. Dispositif de sécurité (1) selon n'importe lesquelles des revendications précédentes, où les moyens de contrôle sont conçus pour comparer la tension (U3) au niveau de la deuxième borne (12) avec une valeur seuil et pour basculer le commutateur (S1) d'une position OFF à ON si la tension (U3) excède une valeur seuil déterminée.

8. Dispositif de sécurité (1) selon la revendication 5 ou la revendication 6, où les moyens de contrôle sont conçus pour comparer la tension (U3) au niveau de la deuxième borne (12) avec une valeur seuil et pour basculer le commutateur (S1) d'une position OFF à ON si la tension (U3) excède une valeur seuil déterminée ou le capteur de température indique que la température augmente et est au-dessus d'un seuil déterminé.

9. Dispositif de sécurité (1) selon les revendications 5 ou 6, où les moyens de contrôle sont conçus, au moyen d'entrées de contrôle (110) et (108), pour détecter le type d'installation entre un type à batterie double et un type à batterie unique, et configurés pour, si l'entrée (110) est à un niveau indiquant que (S4) est ouvert (OFF) et l'entrée (108) est à un niveau indiquant que (S4b) est fermé (ON) ce qui signifie qu'il s'agit d'une installation de type à batterie double et que (S1) de l'autre dispositif de sécurité (1) est fermé (ON), basculer le commutateur (S1) d'une position OFF à ON uniquement si les capteurs de température indiquent que la température monte et est au-dessus d'un seuil déterminé, et si l'entrée (110) est à un niveau indiquant que (S4) est ouvert et l'entrée (108) est à un niveau indiquant que (S4b) est non connecté ou ouvert, ce qui signifie qu'il s'agit d'une installation à batterie unique ou que (S1) de l'autre dispositif de sécurité (1) est ouvert (OFF), basculer le commutateur (S1) d'une position OFF à ON si la tension (U3) excède une valeur seuil déterminée ou les capteurs de température indiquent que la température augmente et est au-dessus d'un seuil déterminé.

10. Dispositif de sécurité (1) selon n'importe lesquelles des revendications précédentes, où l'une des entrées pour le contrôle est connectée, de manière interne ou externe, à un accéléromètre, et configurée de sorte que si la sortie de l'accéléromètre change de manière significative, alors le commutateur (S1) est ouvert lorsque la différence (U1-U3) excède un premier seuil, mais lorsque la sortie de l'accéléromètre ne change pas de manière significative, alors le commutateur (S1) est ouvert lorsque (U1-U3) excède un deuxième seuil, le deuxième seuil étant plus élevé que le premier seuil.

11. Dispositif de sécurité (1) selon n'importe lesquelles des revendications précédentes, où l'une des entrées pour le contrôle est connectée, de manière interne ou externe, à un accéléromètre, et configurée de sorte que si la sortie de l'accéléromètre change de manière significative ou la différence (U1-U3) excède un premier seuil déterminé mais est en dessous d'un deuxième seuil correspondant à des valeurs maximales considérées normales sans court-circuit, alors tout signal de déconnexion est ignoré, mais lorsque la sortie de l'accéléromètre ne change pas de manière significative et (U1-U3) n'excède pas ledit premier seuil ou excède ledit deuxième seuil correspondant à des niveaux normaux, indiquant un court-circuit, alors ledit signal de déconnexion est validé.

12. Dispositif de sécurité (1) selon n'importe lesquelles des revendications 1 à 9, où le dispositif (1) est configuré de telle sorte que si la différence U1-U3 excède un premier seuil mais est en dessous d'un deuxième seuil correspondant à des valeurs maximales considérées normales sans court-circuit, alors tout signal de déconnexion est ignoré.
